# EUROPÄISCHE PATENTSCHRIFT

(11) **EP 0 650 942 B1**
(45) Veröffentlichungstag und Bekanntmachung des Hinweises auf die Patenterteilung: **17.06.1998**
(21) Anmeldenummer: 94116061.6
(22) Anmeldetag: 12.10.1994
(51) Int. Cl.: C04B 28/04, C04B 24/24, C04B 40/00

(54) **Mörtel für Zweikomponentensysteme**
Mortar for two-component systems
Mortier pour des systèmes à deux composants

(30) Priorität: 02.11.1993 DE 4337264
(43) Veröffentlichungstag der Anmeldung: 03.05.1995
(73) Patentinhaber: UPAT GMBH & CO, D-79312 Emmendingen (DE)
(72) Erfinder: Weber, Christian, D-79312 Emmendingen (DE); Grün, Jürgen, D-79268 Bötzingen (DE)

(56) Entgegenhaltungen:
- EP-A- 0 207 473
- EP-A- 0 495 336
- DE-A- 3 715 720
- DE-A- 3 923 972

## Beschreibung

Die Erfindung betrifft einen Mörtel für Zweikomponentensysteme zur Herstellung eines Verbundkörpers, insbesondere für die Verankerung von Befestigungselementen im Befestigungsgrund.

Der bisher in der Befestigungstechnik verwendete Mörtel basiert hauptsächlich auf radikalisch härtbaren Harzen oder hydraulisch abbindenden Bestandteilen.

Aus der EP 199 671 ist ein Reaktionsharzmörtel bekannt, der als eine Komponente radikalisch härtbares Harz und die zweite Komponente ein Härter enthält, wobei die beiden Komponenten vor dem Verarbeiten getrennt in Form einer Patrone oder einer Kartusche untergebracht sind.

Die Bestandteile eines hydraulischen Mörtels sind üblicherweise in einer Patrone untergebracht (DE AS 11 11 581, EP 502 348), wobei in einer Kammer ein Trockenmörtel und in der zweiten Kammer ein Anmachwasser enthalten ist. Die Durchmischung der beiden Komponenten erfolgt während des rotierenden Eintreibens einer Ankerstange. Um das gute Vermischen der Komponenten zu erreichen, ist es notwendig, das Anmachwasser in einer überstechiometrischen Menge zu verwenden.
Das Aushärten der Masse und die Bildung eines Verbundes dauert sehr lange. Trotz Zugabe von Beschleunigungsmitteln beträgt diese Zeit 10 - 12 Stunden bis das Abbinden und Reifen des Mörtels abgeschlossen ist und die Ankerstange gegen die Bohrlochwandung belastet werden kann.

Eine in Gegenwart von Wasser in kürzerer Zeit härtende Masse ist in EP 495 336 A1 und EP 455 582 A2 beschrieben. Eine derartige Masse beinhaltet ein Oxidgemisch als Feststoff sowie Härterlösung.

Als Härterlösung wird Kalium und/oder Ammoniumsilikat in Wasser gelöst mit einem Wassergehalt bis 60 % verwendet. Die Beschleunigung der Erstarrungs- und Härterreaktion ist durch die Zugabe von Alkali- und/oder Ammoniumcarbonaten und/oder anorganischen und/oder metallorganischen Verbindungen erreicht. Der aus dieser Verbundmasse erreichte Verbundkörper weist einen hohen Alkaligehalt auf. Überall dort, wo Feuchtigkeitszutritt zum Verbundkörper ständig gegeben ist, und als Folge davon kapillare Vorgänge des Flüssigkeitstransports stattfinden, werden die lösbaren Anteile aus dem Verbundkörper ausgewaschen. Daraus resultiert eine erhöhte Rißneigung des Verbundkörpers und eine Minderung des Haftverbundes. Die Dauerhaftigkeit so eines Verbundkörpers wird nicht ausreichend gewährleistet.

Der Erfindung liegt die Aufgabe zugrunde, einen hydraulischen Mörtel in der Art zu verbessern, daß ein leichtes Vermischen der Komponenten im Bohrloch bei Zerstören einer Patrone und in einem Statikmischer einer Zweikammerkartusche erreicht, die Reifezeit des Verbundkörpers verkürzt und somit eine schnelle Verspannung der Ankerstange ermöglicht wird, und daß der Verbundkörper eine hohe Feuchtigkeitsbeständigkeit aufweist.

Erfindungsgemäß wird die Aufgabe durch die in Anspruch 1 angegebenen Merkmale erreicht.

Durch die Zugabe von alkalibeständigen radikalisch härtbaren Harzen zum hydraulischen Bindemittel wird ein Gemisch bereitgestellt, das ein gutes Fließverhalten und Mischbarkeit aufweist. Dadurch, daß die erste Komponente ein Gemisch aus Zementmörtel und alkalibeständigen radikalisch härtbaren Harzen sowie Thixotropiermitteln und Emulgator und die zweite Komponente ein Gemisch aus organischem Peroxid, Wasser und Emulgator sowie inerten Füllstoffen, Verdickungsmittel und Wasserverdunstungsbremse enthält, wird ein System geschaffen, in dem sich völlig unterschiedliche Erhärtungssysteme in der Weise beeinflussen, daß nicht nur ein gutes Vermischen der Komponente im Bohrloch oder im Statikmischer erreicht wird, sondern auch die Bildung des Verbundkörpers wesentlich verkürzt wird.

Die Reaktionswärme der radikalisch härtbaren Harze beschleunigt die Hydratation des Zementes. Dabei entsteht eine ausgeprägte gute Verbindung von anorganischen und organischen Phasen, die eine dauerhafte gemeinschaftliche Bindemittelwirkung im Bohrloch sichert. Durch die Modifizierung des hydraulischen Mörtels mit den radikalisch härtbaren Harzen wird die benötigte Wassermenge für den hydraulischen Anteil auf die untere Grenze gesetzt. Nach dem Aushärten der Masse entsteht ein feuchtigkeitsunempfindlicher Verbundkörper. Als radikalisch härtbares Harz kann ein ungesättigtes Polyesterharz, Vinylesterharz, Vinylurethanharz, Acrylharze, mit oder ohne Monomere, wobei das Monomer mindestens eine Methacrylgruppe und die Viskosität von 1 - 2200 mPa·s bei Temp. 20 °C aufweist, oder eine Mischung derselben, verwendet werden. Für die Befestigungen in Innenräumen werden Harze bevorzugt verwendet, die kein Styrol als Monomer aufweisen.

Die folgenden in Tabellen I - IV erfaßten Beispiele zeigen die Ausführung der vorliegenden Erfindung und verdeutlichen die erreichten Eigenschaften.

**Tabelle I**

| Zementmörtel (trocken) | | | | | | | | | |
|---|---|---|---|---|---|---|---|---|---|
| Beispiel Nr. in Gew.Tl. | | 1 | 2 | 3 | 4 | 5 | 6 | 7 | 8 |
| Tonerdezement | | | | | | | | | |
| Tabelle Ia | 1 | 20 | - | - | - | - | 10 | - | - |
| | 2 | 20 | 20 | - | 12 | 10 | - | - | - |
| | 3 | - | 10 | 10 | 12 | 10 | 10 | - | - |

| Portlandzement | | | | | | | | | |
|---|---|---|---|---|---|---|---|---|---|
| Tabelle Ib | 1 | - | - | - | - | 10 | - | - | - |
| | 2 | - | - | - | 16 | - | 5 | 35 | 35 |
| Gips | | - | 5 | 20 | - | - | 5 | - | 5 |

| Quarzsand-Körnung | | | | | | | | | |
|---|---|---|---|---|---|---|---|---|---|
| 0,04 - 0,15 | | 30 | 20 | - | 10 | - | 35 | 65 | - |
| 0,1 - 0,25 | | - | - | - | 10 | - | 35 | - | 60 |
| 0,08 - 0,2 | | 30 | 30 | 70 | - | 70 | - | - | - |
| 0,3 - 0,5 | | - | 15 | - | 10 | - | - | - | - |
| 1,2 - 1,8 | | - | - | - | 10 | - | - | - | - |
| 2,0 - 3,0 | | - | - | - | 10 | - | - | - | - |
| 3,0 - 5,0 | | - | - | - | 10 | - | - | - | - |

**Tabelle Ia**

| **Hauptbestandteile des Tonerdezementes** | | | | | |
|---|---|---|---|---|---|
| Hauptbestandteile in Gew.-Tl. | Al₂O₃ | CaO | SiO₂ | Fe₂O₃ | FeO |
| Zement Nr. 1 | 50,4 | 36,6 | 6,7 | | |
| Zement Nr. 2 | 71 | 27 | | | |
| Zement Nr. 3 | 39,0 | 38,5 | 4,5 | 12,0 | 4,0 |

**Tabelle Ib**

| **Hauptbestandteile des Portlandzementes** | | | | | |
|---|---|---|---|---|---|
| Hauptbestandteile in Gew.-Tl. | CaO | SiO₂ | Al₂O₃ | Fe₂O₃ | MgO |
| Zement Nr. 1 | 69 | 21 | 8 | 8 | <3 |
| Zement Nr. 2 | 66 | 20 | 3 | 3 | <2 |

**Tabelle II**

| **Radikalisch härtbares Harz** | | | | | | | | |
|---|---|---|---|---|---|---|---|---|
| Beispiel Nr. in Gew.Tl. | 1 | 2 | 3 | 4 | 5 | 6 | 7 | 8 |
| O-Phthalsäurepolyester gelöst in Styrol (60 Gew.%) | 100 | - | - | - | - | - | 30 | - |
| Neopentylglycolpolyester gelöst in Styrol (58 Gew.%) | - | - | - | - | - | 18 | - | - |
| Vinylesterharz auf Basis von Bisphenol A gelöst in Styrol (62 Gew.%) | - | - | - | - | - | 38 | - | - |
| Ethoxyliertes-Bis-Phenol A-Dimethylacrylat Viskosität | | | | | | | | |
| 23 ° C 1.200 mPa·s | - | - | 76 | - | - | - | 38 | 50 |
| 23 ° C 2.000 mPa·s | - | 33 | - | - | 68 | 40 | - | - |
| 23 ° C 500 mPa·s | - | - | - | 86 | - | - | - | - |
| Ethylenglycoldimethacrylat | - | 28 | - | - | - | - | 28 | 25 |
| Butandiolmethacrylat | - | - | 15 | - | 28 | - | - | - |
| Trimethylolpropantrimethacrylat | - | - | 5 | 10 | - | - | - | - |
| Diglicydyl-Bis-Phenol A-Dimethacrylat | | 35 | | | | | | 21 |
| Aminbeschleuniger | | | | | | | | |
| 1. Dimethyl p-Toluidin | 0,3 | 0,3 | 0,3 | 0,1 | 0,3 | 0,1 | 0,3 | 0,3 |
| 2. Diethylenanilin | 0,4 | 0,2 | 0,3 | 0,2 | 0,5 | 0,2 | 0,4 | 0,4 |
| Thixotropiermittel | | | | | | | | |
| Pyrogene Kieselsäure | 2,0 | 2,0 | 2,0 | 2,0 | 2,0 | 2,0 | 2,0 | 2,0 |
| Emulgator | | | | | | | | |
| Alkylphenolethylenglykolether | 1,5 | 1,5 | 1,5 | 1,5 | 1,5 | 1,5 | 1,5 | 1,5 |

**Tabelle III**

| **Peroxidhärter** | | | | | | | | |
|---|---|---|---|---|---|---|---|---|
| Beispiel Nr. in Gew.Tl. | 1 | 2 | 3 | 4 | 5 | 6 | 7 | 8 |
| Peroxid | | | | | | | | |
| Dibenzoylperoxid | 4 | 10 | 8 | 6 | 12 | 20 | 15 | 15 |
| Phlegmatisierungsmittel Wasser | 38 | 49,8 | 33,2 | 43 | 37 | 48 | 32,5 | 30 |

| Inerte Füllstoffe | | | | | | | | |
|---|---|---|---|---|---|---|---|---|
| Calciumcarbonat | - | 33 | 24 | 18 | 36 | 20 | 20 | 28 |
| Hohlglaskugeln | 1,1 | 7 | 9 | - | - | 5 | - | - |
| Glaskugeln 0,1-0,25 | - | - | - | 20 | - | - | - | - |
| Polymethylmethacrylat | 34 | - | 10 | - | - | - | - | - |
| Sand Körnung 0,001-0,5 | - | - | - | - | - | - | 25 | 15 |
| Natriumphosphat | 12 | - | - | - | - | - | - | - |

| Verdickungsmittel | | | | | | | | |
|---|---|---|---|---|---|---|---|---|
| Methylhydroxycelulose | 0,9 | 1,2 | 0,8 | 1,0 | 2,0 | | | |
| Polyvinylalkohol | - | - | - | - | - | 2,0 | 0,5 | 1,0 |

| Verdunstungsbremse | | | | | | | | |
|---|---|---|---|---|---|---|---|---|
| Ethylenglycol | 10 | - | 15 | 12 | 11 | - | - | - |
| Glyzerin | - | - | - | - | - | 5 | - | - |
| Diethylenglycol | - | - | - | - | - | - | 7 | 10 |

**Tabelle IV**

| **Erfindungsgemäße Masse** | | | | | | | | | |
|---|---|---|---|---|---|---|---|---|---|
| Beispiel Nr. in Gew.TI. | | 1 | 2 | 3 | 4 | 5 | 6 | 7 | 8 |
| Zementmörtel nach Tabelle I | | | | | | | | | |
| Beispiel | 1 | 100 | - | - | - | - | - | - | - |
| Beispiel | 2 | - | 115 | - | - | - | - | - | - |
| Beispiel | 3 | - | - | 120 | - | - | - | - | - |
| Beispiel | 4 | - | - | - | 100 | - | - | - | - |
| Beispiel | 5 | - | - | - | - | 100 | - | - | - |
| Beispiel | 6 | - | - | - | - | - | 120 | - | - |
| Beispiel | 7 | - | - | - | - | - | - | 100 | - |
| Beispiel | 8 | - | - | - | - | - | - | - | 100 |

| Radikalisch härtbares Harz nach Tabelle II | | | | | | | | | |
|---|---|---|---|---|---|---|---|---|---|
| Beispiel | 1 | 50 | - | - | - | - | - | - | - |
| Beispiel | 2 | - | - | 50 | - | - | - | - | - |
| Beispiel | 3 | - | 50 | - | - | - | - | - | - |
| Beispiel | 4 | - | - | - | 50 | - | - | - | - |
| Beispiel | 5 | - | - | - | - | 50 | - | - | - |
| Beispiel | 6 | - | - | - | - | - | - | 50 | - |
| Beispiel | 7 | - | - | - | - | - | - | - | 50 |
| Beispiel | 8 | - | - | - | - | - | 50 | - | - |

| Wasserhaltiger Peroxidhärter nach Tabelle III | | | | | | | | | |
|---|---|---|---|---|---|---|---|---|---|
| Beispiel | 1 | - | - | - | - | - | - | 12 | - |
| Beispiel | 2 | - | 12,5 | - | - | - | - | - | - |
| Beispiel | 3 | - | - | - | - | - | 14,0 | - | - |
| Beispiel | 4 | - | - | - | 12,4 | - | - | - | - |
| Beispiel | 5 | - | - | 10 | - | - | - | - | - |
| Beispiel | 6 | - | - | - | - | 10 | - | - | - |
| Beispiel | 7 | 10 | - | - | - | - | - | - | - |
| Beispiel | 8 | - | - | - | - | - | - | - | 14 |

| Auszugswerte in kN nach 1 h, | | | | | | | | | |
|---|---|---|---|---|---|---|---|---|---|
| Ankerstange M12 | | 60 | 65 | 62 | - | 70 | 60 | 65 | 65 |
| Ankerstange M20 | | | | | 120 | | | | |

## Patentansprüche

1. Hydraulischer Mörtel, als Zweikomponentensystem zur Herstellung eines Verbundkörpers, insbesondere für die Verankerung von Befestigungselementen, der aus einem hydraulischen Bindemittel und weiteren Zusatzmitteln besteht, **dadurch gekennzeichnet,** daß die erste Komponente aus Zementmörtel und radikalisch härtbarem Harz und die zweite Komponente aus einem organischen Peroxid und Anmachwasser besteht.

2. Hydraulischer Mörtel nach Anspruch 1, **dadurch gekennzeichnet,** daß die erste Komponente aus
| | |
|---|---|
| 15 - 80 Gew.TI. | radikalisch härtbarem Harz |
| 20 - 80 " | Zementmörtel |
| 2,0 " | Thixotropiermittel |
| 0,0 - 5,0 " | Thixotropierhilfe |
| 0,1 - 5,0 " | Emulgator |
und die zweite Komponente aus
| | |
|---|---|
| 2,0 - 50 Gew.-TI. | organischem Peroxid |
| 5,0 - 40 " | inerten Füllstoffen |
| 20 - 60 " | Wasser |
| 0,1 - 4,0 " | Verdickungsmittel |
| 0,0 - 25,0 " | Wasserverdunstungsbremse |
| 0,1 - 5,0 " | Emulgator |
besteht.

3. Hydraulischer Mörtel nach Anspruch 1, **dadurch gekennzeichnet,** daß als radikalisch härtbares Harz ein ungesättigtes Polyesterharz, Vinylesterharz, Vinylurethanharz, Acrylharze, mit oder ohne Monomere, wobei das Monomer mindestens eine Methacrylgruppe und die Viskosität von 1 - 2200 mPa·s bei Temp. 20 °C aufweist, oder eine Mischung derselben, verwendet wird.

4. Hydraulischer Mörtel nach Anspruch 1, **dadurch gekennzeichnet,** daß das radikalisch härtbare Harz aminvorbeschleunigt wird.

5. Hydraulischer Mörtel nach Anspruch 1, **dadurch gekennzeichnet,** daß als Zement ein Portland-Zement und/oder Tonerdezement verwendet wird.

6. Hydraulischer Mörtel nach Anspruch 1, **dadurch gekennzeichnet,** daß als Thixotropiermittel pyrogene Kieselsäure verwendet wird.

7. Hydraulischer Mörtel nach Anspruch 1, **dadurch gekennzeichnet,** daß als Thixotropierhilfe Polyhydroxycarbonsäureamid und/oder Glyzerin verwendet wird.

8. Hydraulischer Mörtel nach Anspruch 1, **dadurch gekennzeichnet**, daß als Emulgator Oktylphenylpolyethylenglykolether verwendet wird.

9. Hydraulischer Mörtel nach Anspruch 1, **dadurch gekennzeichnet,** daß als organisches Peroxid Dibenzoylperoxid und/oder Methylethylketonperoxid phlegmatisiert in Wasser mit oder ohne Zugabe vom Emulgator verwendet wird.

10. Hydraulischer Mörtel nach Anspruch 1, **dadurch gekennzeichnet,** daß anorganische und/oder organische inerte Füllstoffe verwendet sind.

11. Hydraulischer Mörtel nach Anspruch 1, **dadurch gekennzeichnet,** daß als inerte Füllstoffe Calziumcarbonat, Natriumphosphat, Polymethacrylatpulver, Polyethylen-, Polypropylen-, Polyvinylchloridpulver, Hohlglaskugeln, Glasperlen, Quarzsand verwendet werden.

12. Hydraulischer Mörtel nach Anspruch 1, **dadurch gekennzeichnet,** daß als Verdickungsmittel Hydroxylethylcelulose, Methylhydroxycelulose, Polyvinylalkohol verwendet wird.

13. Hydraulischer Mörtel nach Anspruch 1, **dadurch gekennzeichnet**, daß als Wasserverdunstungsbremse Ethylenglykol, Glyzerin, Diethylenglykol, Triethylenglykol, Dibuthylphthalat verwendet wird.

## Claims

1. Hydraulic mortar, in the form of a two-component system for producing a composite body, especially for anchoring fixing elements, which mortar consists of a hydraulic bonding agent and further additives, **characterized in that** the first component consists of cement mortar and free-radically hardening resin and the second component consists of an organic peroxide and mixing water.

2. Hydraulic mortar according to claim 1, **characterized in that** the first component consists of
| | |
|---|---|
| 15 - 80 parts by weight | of free-radically hardening resin |
| 20 - 80 " " | of cement mortar |
| 2.0 " " | of thixotropic agent |
| 0.0 - 5.0 " " | of thixotropic auxiliary |
| 0.1 - 5.0 " " | of emulsifier |
and the second component consists of
| | |
|---|---|
| 2.0 - 50 parts by weight | of organic peroxide |
| 5.0 - 40 " " | of inert fillers |
| 20 - 60 " " | of water |
| 0.1 - 4.0 " " | of thickener |
| 0.0 - 25.0 " " | of water evaporation retardant |
| 0.1 - 5.0 " " | of emulsifier. |

3. Hydraulic mortar according to claim 1, **characterized in that** as free-radically hardening resin, use is made of an unsaturated polyester resin, vinyl ester resin, vinyl urethane resin, acrylic resins, with or without monomers, the monomer having at last one methacrylic group and having a viscosity of from 1 - 2200 mPa.s at a temperature of 20°C, or a mixture of the same.

4. Hydraulic mortar according to claim 1, **characterized in that** the free-radically hardening resin is amine-preaccelerated.

5. Hydraulic mortar according to claim 1, **characterized in that** a Portland cement and/or aluminous cement are/is used as cement.

6. Hydraulic mortar according to claim 1, **characterized in that** pyrogenic silicic acid is used as thixotropic agent.

7. Hydraulic mortar according to claim 1, **characterized in that** polyhydroxy carboxylic acid amide and/or glycerine are/is used as thixotropic auxiliary.

8. Hydraulic mortar according to claim 1, **characterized in that** octyl phenyl polyethylene glycol ether is used as emulsifier.

9. Hydraulic mortar according to claim 1, **characterized in that** dibenzoyl peroxide and/or methyl ethyl ketone peroxide stabilized in water with or without the addition of emulsifier are/is used as organic peroxide.

10. Hydraulic mortar according to claim 1, **characterized in that** inorganic and/or organic inert fillers are used.

11. Hydraulic mortar according to claim 1, **characterized in that** calcium carbonate, sodium phosphate, polymethacrylate powder, polyethylene powder, polypropylene powder, polyvinylchloride power, hollow glass balls, glass beads, silica sand are used as inert fillers.

12. Hydraulic mortar according to claim 1, **characterized in that** hydroxylethyl cellulose, methylhydroxy cellulose or polyvinyl alcohol is used as thickener.

13. Hydraulic mortar according to claim 1, **characterized in that** ethylene glycol, glycerine, diethylene glycol, triethylene glycol or dibutyl phthalate is used as water evaporation retardant.

## Revendications

1. Mortier hydraulique utilisable comme système à deux composants pour la production d'un corps composite, notamment pour l'ancrage d'éléments de fixation, qui est constitué d'un liant hydraulique et d'autres additifs, caractérisé en ce que le premier composant est constitué de mortier de ciment et de résine durcissable par radicaux et le second composant est constitué d'un peroxyde organique et d'eau de gâchage.

2. Mortier hydraulique suivant la revendication 1, caractérisé en ce que le premier composant est constitué de
15 à 80 parties en poids de résine durcissable par radicaux
20 à 80 parties en poids de mortier de ciment
2,0 parties en poids d'agent thixotrope
0,0 à 5,0 parties en poids d'agent auxiliaire thixotrope
0,1 à 5,0 parties en poids d'émulsionnant
et le second composant est constitué de
2,0 à 50 parties en poids de peroxyde organique
5,0 à 40 parties en poids de charges inertes
20 à 60 parties en poids d'eau
0,1 à 4,0 parties en poids d'agent épaississant
0,0 à 25,0 parties en poids de ralentisseur d'évaporation de l'eau
0,1 à 5,0 parties en poids d'émulsionnant.

3. Mortier hydraulique suivant la revendication 1, caractérisé en ce qu'on utilise comme résine durcissable par radicaux une résine de polyester non saturé, une résine d'ester de vinyle, une résine de vinyluréthane, des résines acryliques, avec ou sans monomère, le monomère présentant au moins un groupe méthacryle et la viscosité à 20°C étant égale à 1-2200 mPa.s, ou un mélange de ces résines.

4. Mortier hyd.ra.ulique suivant la revendication 1, caractérisé en ce que la résine durcissable par radicaux est préalablement accélérée par une amine.

5. Mortier hydraulique suivant la revendication 1, caractérisé en ce qu'on utilise comme ciment un ciment Portland et/ou un ciment alumineux.

6. Mortier hydraulique suivant la revendication 1, caractérisé en ce qu'on utilise comme agent thixotrope de la silice pyrogénée.

7. Mortier hydraulique suivant la revendication 1, caractérisé en ce qu'on utilise comme agent auxiliaire thixotrope un amide d'acide polyhydroxycarboxylique et/ou du glycérol.

8. Mortier hydraulique suivant la revendication 1, caractérisé en ce qu'on utilise comme émulsionnant un éther octylphénylique de polyéthylèneglycol.

9. Mortier hydraulique suivant la revendication 1, caractérisé en ce qu'on utilise comme peroxyde organique le peroxyde de dibenzoyle et/ou le peroxyde de méthyléthyl cétone stabilisé dans l'eau avec ou sans addition d'émulsionnant.

10. Mortier hydraulique suivant la revendication 1, caractérisé en ce qu'on utilise des charges inorganiques et/ou organiques inertes.

11. Mortier hydraulique suivant la revendication 1, caractérisé en ce qu'on utilise comme charges inertes du carbonate de calcium, du phosphate de sodium, un polyméthacrylate en poudre, un polyéthylène, polypropylène ou poly(chlorure de vinyle) en poudre, des sphères creuses en verre, des perles de verre, du sable quartzeux.

12. Mortier hydraulique suivant la revendication 1, caractérisé en ce qu'on utilise comme agent épaississant de l'hydroxyéthylcellulose, de la méthylhydroxycellulose, un polymère d'alcool vinylique.

13. Mortier hydraulique suivant la revendication 1, caractérisé en ce qu'on utilise de l'éthylène glycol, du glycérol, du diéthylène glycol, du triéthylène glycol ou du phtalate de dibutyle comme ralentisseur d'évaporation de l'eau.
